# FASCICULE DE BREVET EUROPEEN

(11) **EP 2 150 477 B1**
(45) Date de publication et mention de la délivrance du brevet: **06.07.2011**
(21) Numéro de dépôt: 08759883.5
(22) Date de dépôt: 21.05.2008
(51) Int. Cl.: B65D 90/02, B65D 90/06, B65D 90/08, F16L 23/16

(54) **CUVE DE STOCKAGE**
SPEICHERBEHÄLTER
STORAGE TANK

(30) Priorité: 01.06.2007 FR 0703919
(43) Date de publication de la demande: 10.02.2010
(73) Titulaire: Maya Group, 35430 Chateauneuf D'ille Et Vilaine (FR)
(72) Inventeur: JUHERE, Yannick, F-35260 Cancale (FR)
(74) Mandataire: Maillet, Alain
(86) Numéro de dépôt international: PCT/EP2008/056282
(87) Numéro de publication internationale: WO 2008/145589

(56) Documents cités:
- FR-A- 2 715 385
- US-A- 2 592 419

## Description

La présente invention concerne une cuve de stockage de grand volume, c'est-à-dire dont l'unité de mesure s'exprime en m³. Cette cuve est du type comportant un tronçon de fermeture fermé par un fond, un autre tronçon de fermeture ou un fond. Elle peut encore incorporer un ou plusieurs tronçon(s) intercalaire(s). Au moins deux de ces composants voisins sont réunis l'un à l'autre par l'intermédiaire d'un moyen de jonction.

Une cuve de stockage de grand volume est présentée en particulier dans la demande de brevet FR-A-2 715 385. Cette cuve comprend deux modules d'extrémité ainsi que plusieurs modules centraux assemblés mutuellement. Chaque module présente globalement une section cylindrique en étant pourvu à son extrémité libre ou à ses deux extrémités libres, selon qu'il s'agit d'un module d'extrémité ou d'un module central, d'une collerette adaptée à coopérer avec une collerette d'un autre module pour assembler, de manière étanche ces deux modules entre eux. Un profilé annulaire métallique présentant une section en T est interposé entre deux collerettes voisines. L'aile radiale de ce profilé, ainsi que les collerettes, sont traversées par des trous dans lesquels sont montés des boulons de fixation. Un cordon de soudure, déposé par extrusion comble intérieurement l'espace résiduel entre les deux collerettes, laissé vacant par l'aile radiale du profilé. En appliquant une électrode d'un appareil de contrôle sur le profilé annulaire et en parcourant le cordon de soudure avec une deuxième électrode, on peut mettre en évidence la moindre fissure entre l'intérieur de la cuve et le profilé annulaire grâce à la production d'un arc électrique susceptible d'être généré par l'appareil de contrôle. On vérifie ainsi l'étanchéité de la cuve.

Le demandeur a cherché à simplifier la construction d'une telle cuve en la rendant moins onéreuse à fabriquer et en cherchant à obtenir une tenue à l'étanchéité améliorée de la cuve dans le temps.

A cet effet, est proposée une cuve de stockage de grand volume, comprenant un tronçon de fermeture fermé par un fond, un autre tronçon de fermeture ou un fond et/ou au moins un tronçon intercalaire, au moins deux de ces composants voisins étant réunis l'un à l'autre par l'intermédiaire d'un moyen de jonction comprenant deux collerettes réalisées sur les extrémités libres annulaires de ces deux composants en étant tournées en vis-à-vis, une pluralité de boulons traversant les deux collerettes pour les assembler. Selon l'invention, le moyen de jonction comprend une pluralité de rondelles montées sur les vis des boulons en étant interposées entre les deux collerettes pour former entre elles un volume annulaire de réception d'un moyen d'étanchéité.

Par cette construction, on assemble de manière économique et néanmoins très efficace les différents composants de la cuve et l'on prévoit une réservation de largeur calibrée pour réceptionner un moyen d'étanchéité.

Selon une caractéristique additionnelle de l'invention, le moyen d'étanchéité est constitué d'un cordon d'une matière identique à celle des deux composants et qui est déposé par extrusion depuis l'intérieur de la cuve dans le volume annulaire.

L'application de ce cordon depuis l'intérieur de la cuve s'insinue profondément dans le volume annulaire et recouvre les rebords internes des deux collerettes, procurant ainsi une barrière parfaitement étanche entre l'intérieur et l'extérieur de la cuve.

Selon une caractéristique additionnelle de l'invention, la cuve incorpore un élément destiné, en coopération avec un appareil de contrôle, à qualifier la qualité du moyen d'étanchéité.

Les défauts du moyen d'étanchéité, non détectables à l'oeil, peuvent ainsi être mis en évidence.

Selon une caractéristique additionnelle de l'invention, l'élément est constitué d'un jonc métallique placé dans le volume annulaire, à l'extérieur du moyen d'étanchéité.

En déplaçant un palpeur d'un appareil de contrôle sur le moyen d'étanchéité, on peut contrôler l'écho émis par le jonc métallique pour apprécier la qualité du cordon de soudure.

Selon une caractéristique additionnelle de l'invention, un joint est logé dans le volume annulaire, à l'extérieur du moyen d'étanchéité.

En plaçant un joint d'étanchéité supplémentaire entre les deux collerettes, on peut pallier à une éventuelle défaillance du joint principal.

Selon une caractéristique additionnelle de l'invention, le joint est maintenu prisonnier entre deux empreintes formées en vis-à-vis respectivement dans les faces d'extrémité des deux collerettes.

Ce joint est avantageusement fabriqué par extrusion dans une matière élastomère puis coupé à longueur.

Selon une caractéristique additionnelle de l'invention, le jonc métallique est interposé entre le joint et le moyen d'étanchéité.

On peut de la sorte placer le jonc métallique contre le joint afin de le positionner avec précision pour obtenir un fonctionnement optimum de l'appareil de contrôle du cordon de soudure.

Selon une caractéristique additionnelle de l'invention, au moins un tronçon d'extrémité comprend un fond de type bombé.

Selon une caractéristique additionnelle de l'invention, le tronçon d'extrémité et/ou le tronçon intercalaire comporte extérieurement des supports de fixation pour des étais.

Selon une caractéristique additionnelle de l'invention, un tronçon d'extrémité comprend un fond de type plat.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue latérale d'une cuve incluant un tronçon d'extrémité, un tronçon intercalaire, ainsi qu'un fond de fermeture du tronçon intercalaire selon l'invention,
la Fig. 2 représente une vue latérale d'une cuve incluant un tronçon d'extrémité, un tronçon intercalaire, ainsi qu'un autre un tronçon d'extrémité selon l'invention,
la Fig. 3 représente une vue d'extrémité d'une cuve selon l'invention,
la Fig. 4 représente une vue en détail d'un assemblage de deux tronçons d'une cuve selon l'invention,
la Fig. 5 représente un outillage destiné à former dans un moule de fabrication, une collerette sur un tronçon ou sur un fond pour une cuve selon l'invention,
la Fig. 6 représente une vue latérale d'une cuve incluant un tronçon d'extrémité, deux tronçons intercalaires ainsi qu'un autre tronçon d'extrémité selon l'invention,
la Fig. 7 représente une vue latérale d'une cuve incluant un tronçon d'extrémité, deux tronçons intercalaires de volumes différents ainsi qu'un autre tronçon d'extrémité selon l'invention,
la Fig. 8 représente une vue latérale d'une cuve incluant deux modules, chaque module, fabriqué d'un seul tenant, incluant un tronçon d'extrémité et un tronçon intercalaire selon l'invention et,
la Fig. 9 représente une vue latérale d'une variante de réalisation d'une cuve selon l'invention.

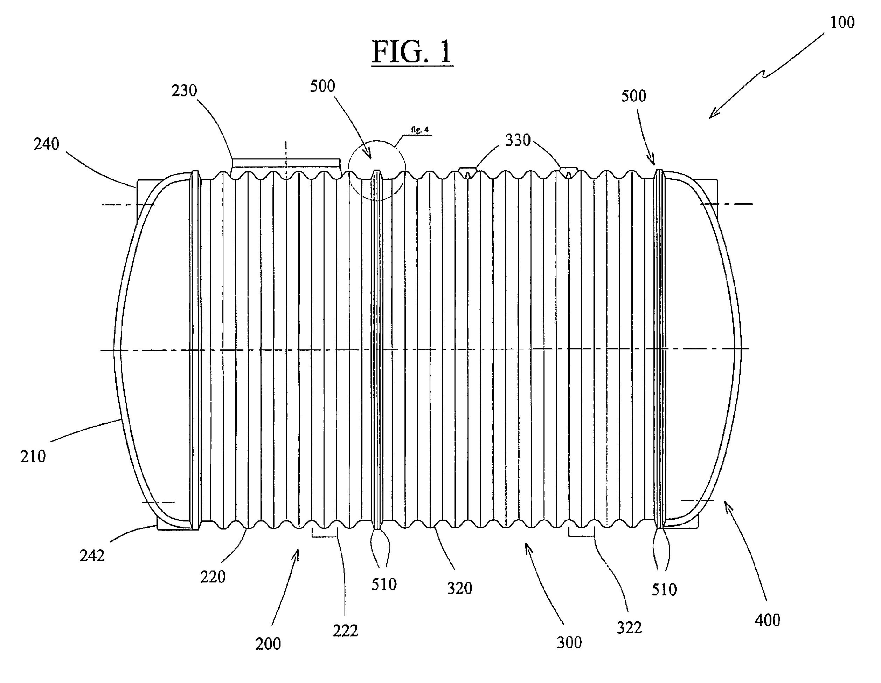

La cuve 100, qui est présentée à la Fig. 1, est une cuve de stockage de grand volume dont la capacité peut atteindre plusieurs dizaines de m³.

Elle est destinée à de multiples applications comme contenir des produits chimiques, des hydrocarbures, des produits alimentaires. Elle convient également pour collecter des eaux d'assainissement, ou pour stocker des eaux pluviales. Elle peut encore être utilisée comme cuve de séparation ou de décantation.

La cuve 100 comprend essentiellement, à cette Fig. 1, un tronçon d'extrémité 200 fermé par un fond 210 bombé, au moins un tronçon intercalaire 300 accolé au tronçon d'extrémité, ainsi qu'un fond 400 de fermeture du tronçon intercalaire et qui est à cette Fig. 1 un fond bombé. Cette cuve est de type horizontal, c'est-à-dire que cette cuve est destinée à reposer horizontalement sur le sol ou à être enterrée dans cette position.

Les différents tronçons et le fond sont avantageusement fabriqués par un procédé de rotomoulage, procédé permettant à une matière plastique fluide d'épouser les parois intérieures d'un moule ou d'un ensemble de moules chauffé et qui est mis en rotation. La matière utilisée pour la fabrication de ces constituants est préférentiellement du polyéthylène ou du polypropylène.

Le tronçon d'extrémité 200 comprend une paroi périphérique 220, par exemple cylindrique, ouverte d'un côté et fermée de l'autre par une paroi bombée, formant l'un, 210, des fonds de la cuve. La paroi périphérique 220 présente en coupe longitudinale une succession d'ondulations 222 pour procurer à la cuve une tenue mécanique suffisante lorsqu'elle est remplie. Le tronçon d'extrémité 200 est fabriqué d'un seul tenant.

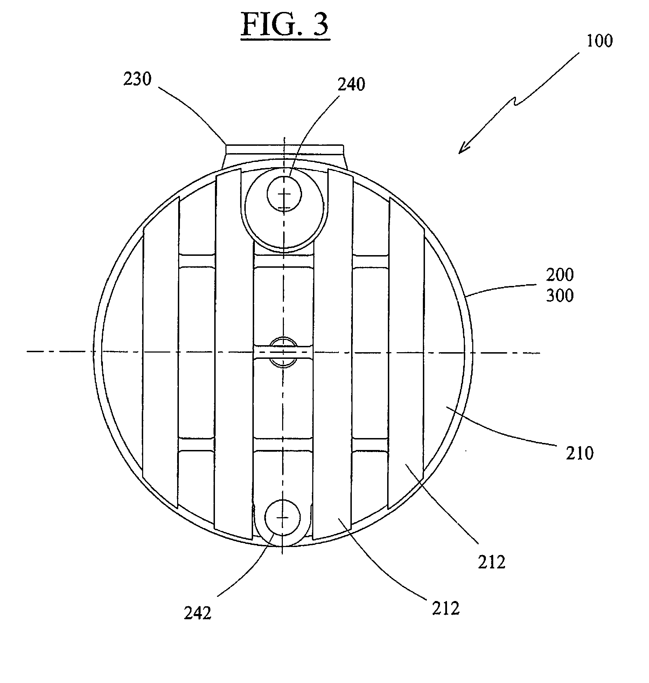

A la Fig. 3, le fond 210 de la paroi périphérique 220 est pourvu, dans le même but, de nervures 212 pour rigidifier sa structure.

Aux Figs. 1 et 3, une ouverture 230, de type trou d'homme, traverse la paroi périphérique du tronçon d'extrémité 200. Des orifices 240, 242 de raccordement de la cuve 100 traversent le fond 210.

A la Fig. 1, le tronçon intercalaire 300 comprend lui aussi une paroi périphérique 320 pourvue d'ondulations 322 à l'instar du tronçon d'extrémité 200.

Il peut également être pourvu d'une ouverture de type trou d'homme, et comporter des crochets, non représentés, pour permettre sa manutention et celle de la cuve 100.

Pour reprendre les efforts verticaux que subit la cuve lorsqu'elle est enterrée, au moins l'un des tronçons et ici le tronçon intercalaire 300 comportent extérieurement des supports 330 sur lesquels peuvent être fixés des étais de reprise de charges qu'exerce le sol sur la cuve.

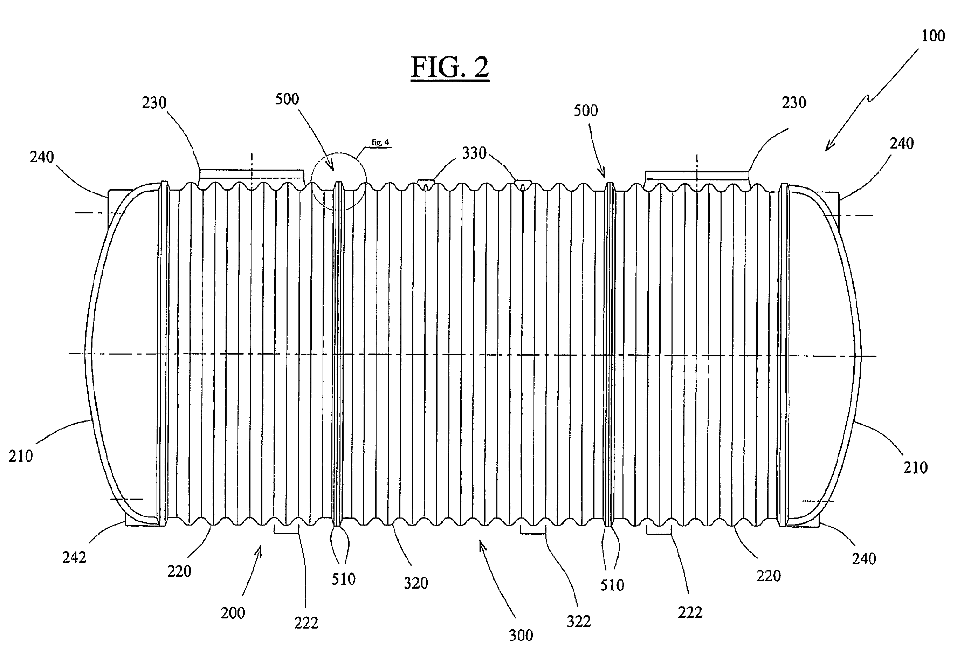

A la Fig. 2, la cuve 100, d'une capacité supérieure à celle de la Fig. 1, comprend un premier tronçon d'extrémité 200, un tronçon intercalaire 300 ainsi qu'un second tronçon d'extrémité 200 tourné en sens inverse du premier.

Un moyen de jonction 500 réunit les deux tronçons 200 et 300. Un autre moyen de jonction 500 réunit également le tronçon intercalaire 300 et le fond 400 (Fig. 1) ou le tronçon intercalaire 300 avec l'autre tronçon d'extrémité 200 (Fig. 2).

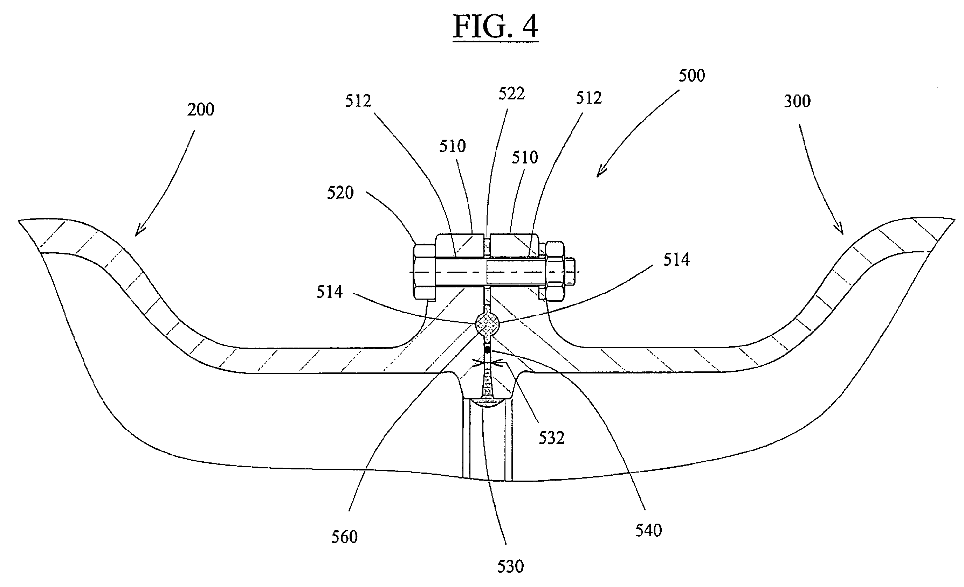

A la Fig. 4, le moyen de jonction 500 comprend deux collerettes 510 radiales, réalisées respectivement sur les extrémités annulaires libres des tronçons 200 et 300, en faisant saille vers l'extérieur de la cuve, un moyen d'assemblage 520 pour réunir les deux collerettes positionnées en vis-à-vis afin d'assembler mutuellement les deux tronçons, un moyen d'étanchéité 530 prenant place dans un volume annulaire 532 existant entre les deux collerettes, ainsi qu'un élément 540 destiné, en coopération avec un appareil de contrôle, à qualifier la qualité du moyen d'étanchéité 530.

On remarquera à la Fig. 1 que le tronçon d'extrémité 200 ainsi que le fond 400 sont pourvus respectivement d'une seule collerette 510 sur leur unique extrémité annulaire alors que le tronçon intercalaire 300 en comporte deux, c'est-à-dire une sur chaque extrémité annulaire.

A la Fig. 4, le moyen d'assemblage 520 est constitué d'une pluralité de boulons répartis à la périphérie des collerettes et qui sont logés dans des trous 512 traversant les deux collerettes. Pour ménager le volume annulaire 532 entre les deux collerettes, en particulier pour placer le moyen d'étanchéité 530, une rondelle 522 est placée sur la vis de chaque boulon, en étant interposée entre les deux collerettes 510.

Le moyen d'étanchéité 530 est avantageusement constitué par un cordon d'une matière identique à celle des tronçons 200, 300 et du fond 400 et qui est déposé par extrusion, par exemple à l'aide d'une extrudeuse, dans le volume annulaire 532 et du côté intérieur de la cuve. Pendant son dépôt, le cordon s'insinue profondément dans le volume annulaire 532 et recouvre les rebords internes des deux collerettes, procurant ainsi une barrière parfaitement étanche entre l'intérieur et l'extérieur de la cuve.

Pour s'assurer que le cordon de soudure est parfaitement continu ou n'incorpore pas de bulles d'air susceptibles de compromettre son étanchéité, un jonc 540, constitué d'un fil métallique, est placé dans le volume annulaire 532, avant la dépose du cordon 530. On peut ainsi contrôler, à l'aide d'un appareil, par exemple un appareil générant des ultrasons et qui est raccordé à un palpeur, l'écho émis par le jonc 540 en déplaçant le palpeur sur le cordon de soudure 530 pour apprécier sa qualité.

La présence, en particulier, de bulles à l'intérieur du cordon, non détectables à l'oeil nu, est mise en évidence par ce contrôle.

Pour procurer un niveau d'étanchéité irréprochable de la cuve, on peut prévoir, en supplément du cordon de soudure 530, un joint 560 qu'il convient de placer dans le volume annulaire 532, et ceci avant la pose du jonc 540 et le dépôt du cordon 530.

Ce joint 560, de section constante, est fabriqué dans un élastomère. Il est coupé à longueur, puis placé entre deux empreintes 514 formées respectivement sur les faces d'extrémité des deux collerettes 510. Le joint est sur cette Fig. de section circulaire et chaque empreinte 514 est formée d'une gorge semi-circulaire. Ce joint 560 pourrait, en particulier, intervenir en cas de défaillance du cordon de soudure 530.

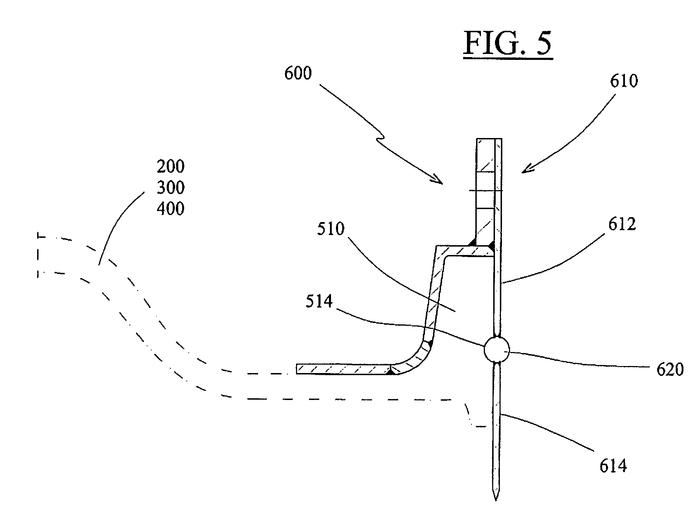

La fabrication de cette empreinte, et plus généralement de la collerette, est mise en oeuvre par un outillage 600 présenté à la Fig. 5 et qui peut être adapté sur un moule de fabrication d'un tronçon ou de plusieurs tronçons ou encore d'un fond. Cet outillage doit être monté en bout du moule. Il comprend ainsi une couronne 610 destinée à former la face d'extrémité de la collerette 510 et qui est fixée, par exemple, par soudage sur le moule de fabrication. Cette couronne 610 est constituée d'une couronne externe 612, d'une couronne interne 614, réunies par un tore 620, interposé entre elles et qui est destiné à former l'empreinte 514 pour le joint.

Lorsque ce joint 560 est présent, comme cela apparaît à la Fig. 4, il est avantageux de placer le jonc 540 contre le joint 560 pour le positionner à une distance constante des rebords internes des deux collerettes 510, afin d'obtenir un fonctionnement optimum de l'appareil de contrôle du cordon de soudure 530.

On remarquera, à la Fig. 1, que le moyen de jonction 500 entre le tronçon intercalaire 300 et le fond 400 est du même type que celui existant entre les deux tronçons 200 et 300.

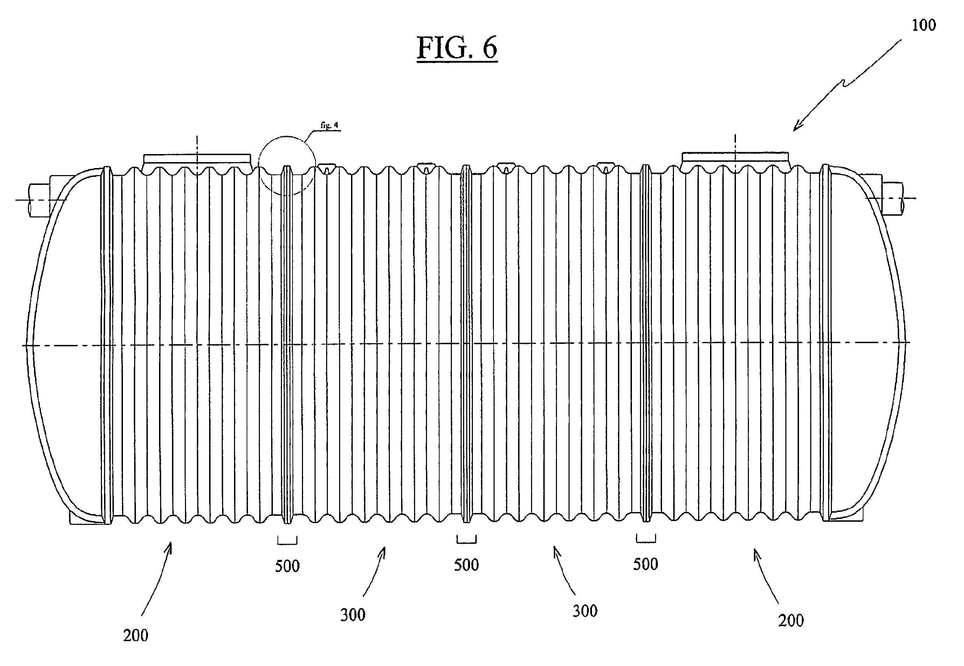

Par ailleurs, un ou plusieurs autres tronçons intercalaires peuvent être incorporés dans la construction de la cuve pour accroître sa capacité. A la Fig. 6, deux tronçons intercalaires 300 de même capacité, un premier tronçon d'extrémité 200, ainsi qu'un second tronçon d'extrémité 200 composent la cuve 100. Un moyen de jonction 500, tel que celui qui vient d'être décrit, réunit alors chaque tronçon d'extrémité 200 avec un tronçon intercalaire 300 voisin, les deux tronçons intercalaires 300.

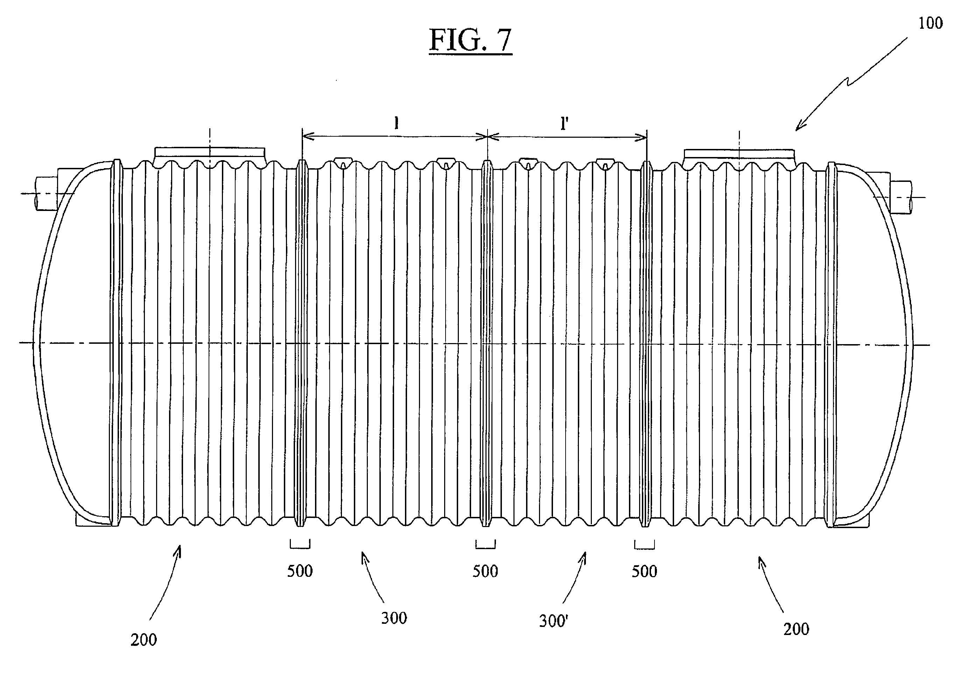

A la Fig. 7, la longueur 1' du second tronçon intercalaire 300' est inférieure à celle, 1, du premier tronçon intercalaire 300, leur procurant ainsi deux capacités différentes pour proposer, par combinaison, des cuves dans une gamme étendue de capacité.

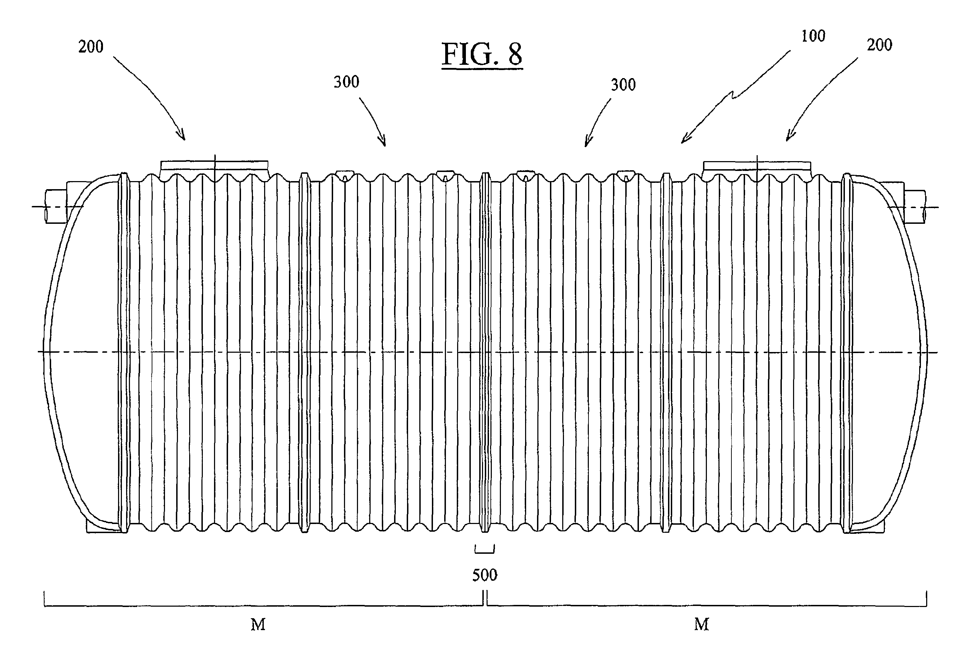

Suivant le volume de la cuve que l'on désire réaliser, on peut associer un tronçon d'extrémité avec un tronçon intercalaire non pas avec un moyen de jonction, mais en les fabriquant ensembles dans deux moules adaptés que l'on associe pour les fabriquer par rotomoulage. On peut ainsi fabriquer d'un seul tenant un module M comprenant un tronçon d'extrémité associé à un tronçon intercalaire, comme cela apparaît à la Fig. 8. Il peut être avantageux d'utiliser un tel module pour supprimer un moyen de jonction. En effet, à cette Fig. 8, un seul moyen de jonction 500 est utilisé pour relier deux modules comprenant chacun un tronçon d'extrémité ainsi qu'un tronçon intercalaire.

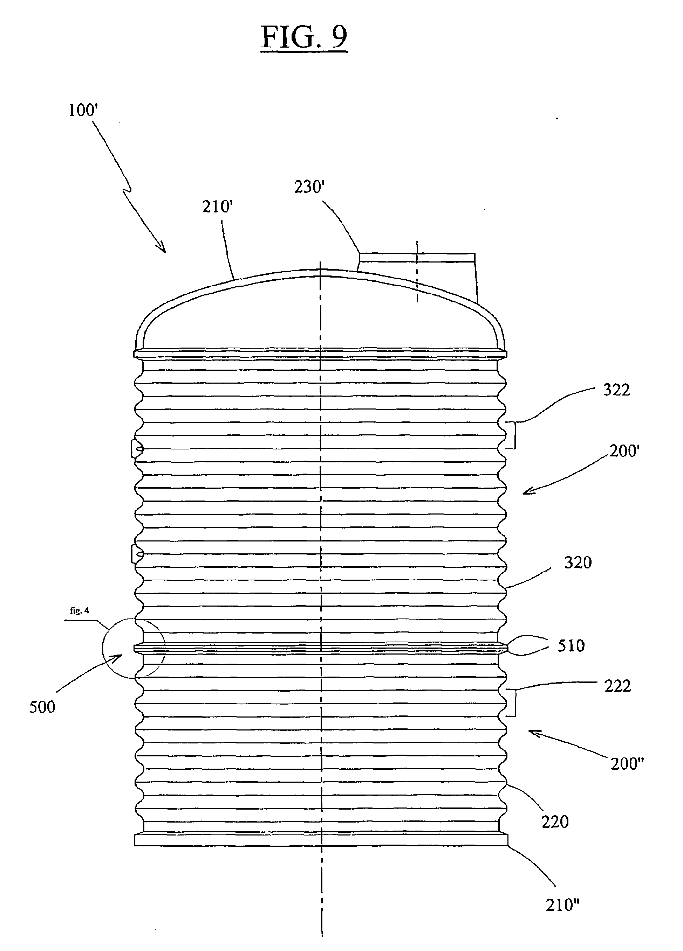

La cuve présentée aux Figs. 1, 2, 6, 7 et 8 est une cuve de type horizontale. Une cuve 100' de type verticale et présentée à la Fig. 9, c'est-à-dire une cuve qui est destinée à reposer verticalement sur le sol, par exemple lorsque l'encombrement minimum au sol est recherché. La cuve comprend ici, deux tronçons d'extrémité 200', 200" réunis par un moyen de jonction 500. L'ouverture 230', de type trou d'homme, traverse ici la paroi de fond 210' d'un tronçon d'extrémité 200', c'est-à-dire une partie haute de la cuve 100'. L'autre tronçon d'extrémité 200" incorpore ici un fond 210", plat, pour procurer une assise stable de la cuve 100' sur le sol.

La construction d'une cuve 100 ou 100' de l'invention se présente de la manière suivante. On pré assemble les constituants fabriqués par rotomoulage sur un banc de montage plan et horizontal, non représenté. Les cuves 100 de type horizontal, 100' ou de type vertical sont construites horizontalement sur ce banc.

On place les tronçons d'extrémité 200, 200' ou 200", le ou les tronçons intercalaires 300, 300' ainsi que, le cas échéant, le fond 400 en remplacement d'un tronçon d'extrémité 200, 200' ou 200", dans une position d'alignement, en les calant provisoirement au besoin.

On pose chaque joint 560 dans une empreinte 514. Pour l'y faire tenir, on peut pour cela préencoller l'empreinte de réception. On pré-assemble ensuite les tronçons entre eux ainsi que, le cas échéant, le fond avec son tronçon voisin, avec des boulons 520 que l'on enfile dans les trous 512 et en plaçant les rondelles d'écartement autour des vis entre deux collerettes 510 voisines. On pose le jonc 540 de contrôle, découpé à longueur et éventuellement cambré dans le volume annulaire 532. Pour le placer avec précision, on peut s'aider pour cela en le plaquant sur le joint 560. On bride ensuite les tronçons et, le cas échéant, le fond en serrant convenablement l'ensemble des boulons 520. L'étape suivante consiste à déposer un cordon 530 de matière extrudée dans le volume annulaire 532 existant entre deux collerettes 510 voisines pour souder de manière étanche les tronçons entre eux et le fond avec son tronçon voisin, si tel est le cas. On procède ensuite au contrôle des soudures en déplaçant sur la surface de chaque cordon 530 le palpeur d'un appareil de contrôle fonctionnant par émission d'ondes ultrasonores pour vérifier la qualité des soudures et ainsi l'étanchéité de la cuve. La fabrication de la cuve peut être complétée par la pose d'accessoires, comme la pose de raccordements, d'un couvercle de fermeture du trou d'homme.

La cuve de l'invention est d'une construction plus simple à mettre en oeuvre et moins onéreuse à fabriquer que celle connue de l'état de la technique.

Par la modularité de sa conception, on peut construire des cuves couvrant une large gamme de capacité à partir d'éléments rotomoulés standards.

La qualité de la jonction de ces éléments lui procure un niveau d'étanchéité remarquable.

## Revendications

1. Cuve (100, 100') de stockage de grand volume comprenant un tronçon de fermeture (200, 200', 200") fermé par un fond (210, 210', 210"), un autre tronçon de fermeture (200, 200', 200") ou un fond (400) et/ou au moins un tronçon intercalaire (300, 300'), au moins deux de ces composants voisins étant réunis l'un à l'autre par l'intermédiaire d'un moyen de jonction (500) comprenant deux collerettes (510) réalisées sur les extrémités libres annulaires de ces deux composants en étant tournées en vis-à-vis, une pluralité de boulons (520) traversant les deux collerettes (510) pour les assembler, **caractérisée en ce que** le moyen de jonction (500) comprend une pluralité de rondelles (522) montées sur les vis des boulons (520) en étant interposées entre les deux collerettes (510) pour former entre elles un volume annulaire (532) de réception d'un moyen d'étanchéité (530).

2. Cuve (100, 100') selon la revendication 1, **caractérisée en ce que** le moyen d'étanchéité (530) est constitué d'un cordon d'une matière identique à celle des deux composants et qui est déposé par extrusion depuis l'intérieur de la cuve dans le volume annulaire (532).

3. Cuve (100, 100') selon la revendication 1 ou 2, **caractérisée en ce qu'**elle incorpore un élément (540) destiné, en coopération avec un appareil de contrôle, à qualifier la qualité du moyen d'étanchéité (530).

4. Cuve (100, 100') selon la revendication 3, **caractérisée en ce que** l'élément (540) est constitué d'un jonc métallique placé dans le volume annulaire (532), à l'extérieur du moyen d'étanchéité (530).

5. Cuve (100, 100') selon l'une quelconque des revendications 1 à 4, **caractérisée en ce qu'**un joint (560) est logé dans le volume annulaire (532), à l'extérieur du moyen d'étanchéité (530).

6. Cuve (100, 100') selon la revendication 5, **caractérisée en ce que** le joint (560) est maintenu prisonnier entre deux empreintes (514) formées en vis-à-vis respectivement dans les faces d'extrémité des deux collerettes (510).

7. Cuve (100, 100') selon la revendication 4, 5 ou 6, **caractérisée en ce que** le jonc métallique (540) est interposé entre le joint (560) et le moyen d'étanchéité (530).

8. Cuve (100) selon l'une quelconque des revendications précédentes, **caractérisée en ce qu'**au moins un tronçon d'extrémité (200) comprend un fond (210) de type bombé.

9. Cuve (100) selon l'une quelconque des revendications précédentes, **caractérisée en ce que** le tronçon d'extrémité (200) et ou le tronçon intercalaire (300, 300') comporte extérieurement des supports (330) de fixation pour des étais.

10. Cuve (100') selon l'une quelconque des revendications 1 à 7, **caractérisée en ce qu'**un tronçon d'extrémité (200") comprend un fond (210") de type plat.

## Claims

1. Large-volume storage vessel (100, 100'), comprising a closure section (200, 200', 200") closed by a bottom (210, 210', 210"), another closure section (200, 200', 200") or a bottom (400) and/or and at least one insert section (300, 300'), at least two of these adjacent components being joined to each other by a joining means (500) comprising two collars (510) produced on the annular free ends of these two components while being turned to face each other, a plurality of bolts (520) passing through the two collars (510) in order to assemble them, **characterized in that** the joining means (500) comprises a plurality of washers (522) mounted on the screws of the bolts (520) while being interposed between the two collars (510) in order to form between them an annular volume (532) to receive a sealing means (530).

2. Vessel (100, 100') according to claim 1, **characterized in that** the sealing means (530) consists of a bead of a material identical to that of the two components and which is deposited by extrusion from the inside of the vessel in the annular volume (532).

3. Vessel (100, 100') according to claim 1 or 2, **characterized in that** it incorporates an element (540) intended, in cooperation with an inspection device, to determine the quality of the sealing means (530).

4. Vessel (100, 100') according to claim 3, **characterized in that** the element (540) consists of a metal ring placed in the annular volume (532) outside the sealing means (530).

5. Vessel (100, 100') according to any one of claims 1 to 4, **characterized in that** a gasket (560) is seated in the annular volume (532), outside the sealing means (530).

6. Vessel (100, 100') according to claim 5, **characterized in that** the gasket (560) is held captive between two indentations (514) formed opposite each other respectively in the end faces of the two collars (510).

7. Vessel (100, 100') according to claim 4, 5 or 6, **characterized in that** the metal ring (540) is interposed between the gasket (560) and the sealing means (530).

8. Vessel (100) according to any one of the preceding claims, **characterized in that** at least one end section (200) comprises a bottom (210) of the domed type.

9. Vessel (100) according to any one of the preceding claims, **characterized in that** the end section (200) and/or the insert section (300, 300') comprises externally fixing supports (330) for stays.

10. Vessel (100) according to any one of claims 1 to 7, **characterized in that** an end section (200") comprises a bottom (210") of the flat type.

## Patentansprüche

1. Speicherbehälter (100, 100') für ein großes Volumen, umfassend einen durch einen Boden (210, 210', 210") geschlossenen Schließabsahnitt (200, 200', 200"), einen weiteren Schließabschnitt (200, 200', 200") oder einen Boden (400) und/oder mindestens einen Zwischenabschnitt (300, 300'), wobei mindestens zwei dieser benachbarten Bauteile miteinander durch ein Verbindungsmittel (500) verbunden sind, umfassend zwei Krägen (510), die an den ringförmigen freien Enden dieser beiden Bauteile ausgeführt sind, wobei sie einander gegenüber liegend angeordnet sind, eine Vielzahl von Bolzen (520), die durch die beiden Krägen (510) hindurchgehen, um sie zusammenzufügen, **dadurch gekennzeichnet, dass** das Verbindungsmittel (500) eine Vielzahl von Scheiben (522) umfasst, die auf den Schrauben der Bolzen (520) montiert sind, wobei sie zwischen den beiden Krägen (510) angeordnet sind, um zwischen sich ein ringförmiges Volumen (532) für die Aufnahme eines Dichtungsmittels (530) zu bilden.

2. Behälter (100, 100') nach Anspruch 1, **dadurch gekennzeichnet, dass** das Dichtungsmittel (530) von einer Schnur aus identischem Material wie jenes der beiden Bauteile gebildet ist, die durch Extrusion vom Inneren des Behälters in dem ringförmigen Volumen (532) aufgebracht wird.

3. Behälter (100, 100') nach Anspruch 1 oder 2, **dadurch gekennzeichnet, dass** er ein Element (540) umfasst, das in Zusammenwirken mit einem Kontrollgerät dazu bestimmt ist, die Qualität des Dichtungsmittels (530) zu bestimmen.

4. Behälter (100, 100') nach Anspruch 3, **dadurch gekennzeichnet, dass** das Element (540) von einem Metallrohr gebildet ist, das in dem ringförmige Volumen (532) außerhalb des Dichtungsmittels (530) angeordnet ist.

5. Behälter (100, 100') nach einem der Anspruche 1 bis 4, **dadurch gekennzeichnet, dass** eine Dichtung (560) in dem ringförmigen Volumen (532) außerhalb des Dichtungsmittels (530) angeordnet ist.

6. Behälter (100, 100') nach Anspruch 5, **dadurch gekennzeichnet, dass** die Dichtung (560) zwischen zwei Abdrucken (514), die jeweils gegenüber den Endfläche der beiden Krägen (510) ausgebildet sind, fest gehalten wird.

7. Behälter (100, 100') nach Anspruch 4, 5 oder 6, **dadurch gekennzeichnet, dass** das Metallrohr (540) zwischen der Dichtung (560) und dem Dichtungsmittel (530) angeordnet ist.

8. Behälter (100) nach einem der vorhergehenden Ansprüche, **dadurch gekennzeichnet, dass** mindestens ein Endabschnitt (200) einen Boden (210) gewölbten Typs umfasst.

9. Behälter (100) nach einem der vorhergehenden Ansprüche, **dadurch gekennzeichnet, dass** der Endabschnitt (200) und/oder der Zwischenabschnitt (300, 300') außen Befestigungsstützen (330) für Streben umfassen.

10. Behälter (100') nach einem der Ansprüche 1 bis 7, **dadurch gekennzeichnet, dass** ein Endabschnitt (200") einen Boden (210") flachen Typs umfasst.
